# EUROPÄISCHE PATENTSCHRIFT

(11) **EP 4 540 517 B1**
(45) Veröffentlichungstag und Bekanntmachung des Hinweises auf die Patenterteilung: **06.05.2026**
(21) Anmeldenummer: 23739088.5
(22) Anmeldetag: 14.06.2023
(51) Int. Cl.: H02K 7/18, F03B 13/08, F03B 13/10, H02K 9/19

(54) **SCHACHT-TURBINE MIT RINGGENERATOR SOWIE FÖRDER- UND DROSSELVORRICHTUNGEN**
SHAFT TURBINE WITH A RING GENERATOR AND CONVEYING AND THROTTLE DEVICES
TURBINE EN PUITS AVEC GÉNÉRATEUR ANNULAIRE AINSI QUE DISPOSITIFS DE REFOULEMENT ET D'ÉTRANGLEMENT

(30) Priorität: 15.06.2022 AT 504292022
(43) Veröffentlichungstag der Anmeldung: 23.04.2025
(73) Patentinhaber: Global Hydro Energy GmbH, 4085 Hofkirchen i.M. (AT)
(72) Erfinder: WITTI, Christian, 4085 Wesenufer (AT)
(74) Vertreter: Burger, Hannes Alfred
(86) Internationale Anmeldenummer: PCT/AT2023/060188
(87) Internationale Veröffentlichungsnummer: WO 2023/240304

(56) Entgegenhaltungen:
- EP-A2- 2 302 766
- EP-B1- 1 451 918
- FR-A- 1 033 077
- US-A1- 2007 145 751

## Beschreibung

Die Erfindung betrifft eine Turbinen-Generatoreinrichtung zur Stromerzeugung durch Energieumwandlung eines Abflusses zwischen Oberwasser und Unterwasser in einem Schachtkraftwerk. Die Turbinen-Generatoreinrichtung umfasst Förder- und Drosselvorrichtungen für Kühl- und Schmierflüssigkeit, welche Kühl- und Schmierflüssigkeit einem Ringraum zwischen einem Ringgenerator-Stator und einem Ringgenerator-Rotor zuzuführen und abzuführen ist. Aus dem Stand der Technik sind artverwandte Dokumente bekannt.

Die EP1451918B1 beschreibt eine Einrichtung zur Erzeugung elektrischer Energie aus einem strömenden Medium, z.B. Wasser, mit einer Anzahl von Turbinen-Generatoreinheiten, die zumindest abschnittsweise übereinander und/oder nebeneinander angeordnet und miteinander zu einem oder mehreren Modulen verbunden sind, dadurch gekennzeichnet, dass zumindest ein Generator einer Turbinen-Generatoreinheit als Synchrongenerator ausgebildet ist, bei welchem als Erregung permanentmagnetische Pole vorgesehen sind. Weiters weist die Turbinen-Generatoreinheit drehbar gelagerte Turbinenschaufeln auf, die im Bereich ihrer äußeren Enden kraftschlüssig mit einem ringförmigen Rotor des Generators der Turbinen-Generatoreinheit verbunden sind, und wobei der Stator des Generators der Turbinen-Generatoreinheit konzentrisch um den Rotor drehfest in dem Modul angeordnet ist. Weiters wird beschrieben, dass ein Ringraum zwischen Rotor und Stator des Generators mit einem Raumabschnitt verbunden ist, welcher von dem durch die Turbine fließenden Medium durchströmt wird, und dass dieser Ringraum von dem Medium durchströmbar ist.

Weiters wurde aus der US 2007 145 751 A1 eine Rohrturbine bekannt, wobei die Rohrturbine eine birnenförmige Lagervorrichtung zur Lagerung einer Welle aufweist, wobei die Welle mit einem Turbinenlaufrad gekoppelt ist, wobei die Rohrturbinen einen Ringgenerator aufweist, wobei ein Generator-Rotor des Ringgenerators an einem Außendurchmesser des Turbinenlaufrads mit dem Turbinenlaufrad drehfest gekoppelt ist, wobei ein Generator-Stator mit einem Gehäuse der Rohrturbine positionsfixiert gekoppelt ist und wobei ein mit Fluid spülbarer Ringeraum zwischen Generator-Stator und Generator-Rotor ausgebildet ist. Der Ringraum ist mittels eines ersten Ringspaltes mit Fluid spülbar, wobei das Fluid mittels eines zweiten Ringspaltes aus dem Ringraum abführbar ist.

Aus dem Stand der Technik bekannte Lösungen zur Bereitstellung von Kühl- und Schmiermittel im Ringraum zwischen Ringgenerator-Stator und Ringgenerator-Rotor bei gattungsgemäßen Turbinen-Generatoreinrichtungen für Schachtkraftwerke sind nur bedingt zufriedenstellend.

Aufgabe der vorliegenden Erfindung war es, die Nachteile des Standes der Technik zu überwinden und eine Vorrichtung zur Verfügung zu stellen, mittels derer Kühl- und Schmiermittel im Ringraum zwischen Ringgenerator-Stator und Ringgenerator-Rotor in einfacher und effektiver Weise bereitstellbar sind, wobei die Bereitstellung dieser Mittel insbesondere durch die besondere konstruktive Ausgestaltung der erfindungsgemäßen Turbinen-Generatoreinrichtung gewährleistet wird.

Diese Aufgabe wird durch eine Vorrichtung gemäß den Ansprüchen gelöst.

Die erfindungsgemäße Turbinen-Generatoreinrichtung zur Stromerzeugung durch Energieumwandlung eines Abflusses eines Oberwassers mit einem Oberwasserniveau in ein Unterwasser mit einem Unterwasserniveau in einem Schachtkraftwerk mit einem Einlaufbecken umfasst ein Ringgehäuse mit einem Einlaufbereich und einem Auslaufbereich, einen Ringgenerator, und ein Turbinenlaufrad mit einer Drehachse. Das Ringgehäuse umfasst im Einlaufbereich eine längs der Drehachse ausgerichtete birnenförmige Lagervorrichtung, wobei die Lagervorrichtung am Ringgehäuse mittels zumindest eines Verbindungselementes lagefest gehaltert ist und wobei eine entlang der Drehachse ausgerichtete Turbinenwelle mittels der Lagervorrichtung gelagert ist, wobei das Turbinenlaufrad im Auslaufbereich mit der Turbinenwelle gekoppelt ist. Der Ringgenerator umfasst einen Ringgenerator-Stator, wobei der Ringgenerator-Stator im Auslaufbereich mit dem Ringgehäuse drehfest gekoppelt ist und axial gegenüberliegend mit dem Tragelement drehfest gekoppelt ist. Weiters umfasst der Ringgenerator einen Ringgenerator-Rotor, wobei der Ringgenerator-Rotor mit dem Turbinenlaufrad an einem Außendurchmesser des Turbinenlaufrads drehfest gekoppelt ist. Zwischen dem Ringgenerator-Stator und dem Ringgenerator-Rotor ist ein Ringraum ausgebildet.

Die Turbinen-Generatoreinrichtung umfasst im Bereich der Kopplung des Ringgehäuses mit dem Ringgenerator eine radial umlaufende erste Förder- und Drosselvorrichtung für die dem Ringraum zuzuführende Kühlflüssigkeit und im Bereich der Kopplung des Ringgenerators mit dem Tragelement eine radial umlaufende zweite Förder- und Drosselvorrichtung für die aus dem Ringraum abzuführende Kühlflüssigkeit umfasst. Dabei ist der Ringraum mittels der ersten Förder- und Drosselvorrichtung und mittels der zweiten Förder- und Drosselvorrichtung mit dem die Turbinen-Generatoreinrichtung durchströmendem Betriebsmittel fluidisch koppelbar, sodass der Ringraum mit Kühl- und Schmierflüssigkeit durchspülbar ist.

Weiters weist die erste Förder- und Drosselvorrichtung einen als erster Ringspalt ausgebildeten Kühlflüssigkeits-Zulauf auf und die zweite Förder- und Drosselvorrichtung weist einen als zweiter Ringspalt ausgebildeten Kühlflüssigkeits-Ablauf auf, wobei die erste und die zweite Förder- und Drosselvorrichtung jeweils ein mit dem Ringgehäuse und/oder dem Ringgenerator-Stator drehfest gekoppeltes erstes Ringelement und jeweils ein mit dem Ringgenerator-Rotor drehfest gekoppeltes zweites Ringelement umfassen, wobei der erste und der zweite Ringspalt zwischen dem jeweils zusammengehörigen ersten Ringelement und dem zweiten Ringelement ausgebildet sind.

Des Weiteren ist der Kühlflüssigkeits-Zulauf relativ zu bzw. ausgehend von einer Normalebene zur Drehachse und entgegen der Durchströmrichtung der Turbinen-Generatoreinrichtung um einen ersten Neigungswinkel geneigt, wobei der erste Neigungswinkel aus einem Bereich bis 60°, insbesondere aus einem Bereich bis 45°, ausgewählt ist.

Demnach sind die erste Förder- und Drosselvorrichtung, der Ringraum und die zweite Förder- und Drosselvorrichtung derart zueinander positioniert und miteinander fluidisch gekoppelt, dass aus dem, die Turbinen-Generatoreinrichtung durchströmendem Betriebsmedium entnommene Kühl- und Schmierflüssigkeit von der ersten Förder- und Drosselvorrichtung, welche in Durchströmrichtung vor dem Turbinenlaufrad positioniert ist, ausgehend durch den Ringraum strömt um darauffolgend durch die zweiten Förder- und Drosselvorrichtung, welche in Durchströmrichtung nach dem Turbinenlaufrad positioniert ist, hindurch wieder in das, die Turbinen-Generatoreinrichtung durchströmende Betriebsmedium übergeben wird.

Die erfindungsgemäße Ausbildung des Kühlflüssigkeits-Zulaufs ist dahingehend vorteilhaft, dass durch die Neigung des Kühlflüssigkeits-Zulaufs entgegen der Durchströmrichtung ein negativer Staudruck oder zumindest ein sehr geringer Staudruck nahe Null im Kühlflüssigkeits-Zulauf auftritt, wobei dennoch, auf Grund der Druckdifferenz im Betriebsmedium zwischen der ersten und der zweiten Förder- und Drosselvorrichtung, die Durchströmung des Ringraums mit Kühl- und Schmierflüssigkeit gewährleistet ist. So kann einerseits durch die geometrische Ausgestaltung des Kühlflüssigkeits-Zulaufs mittels des ersten Neigungswinkels ein für die Turbinen-Generatoreinrichtung geforderter Durchfluss durch den Ringraum gewährleistet werde und andererseits wird durch die Neigung des Kühlflüssigkeits-Zulaufs das Verhindern der Aufnahme von unerwünschtem Sediment in die Kühl- und Schmierflüssigkeit aus dem Betriebsmedium verbessert. Damit wird die Standfestigkeit des Ringgenerators erheblich verbessert, da zum einen die geforderte Kühlleistung im Ringraum bereitgestellt wird und zum anderen Abrasion der den Ringraum begrenzenden Flächen des Ringgenerator-Stators und des Ringgenerator-Rotors minimiert wird. In weiterer Folge ergibt sich dadurch ein wirtschaftlich vorteilhafter Betrieb der Turbinen-Generatoreinrichtung, da die Wartungsintervalle dergleichen erhöht und der Verschleiß der Einzelteile dergleichen verringert werden.

Des Weiteren kann es zweckmäßig sein, wenn der Kühlflüssigkeits-Ablauf relativ zur bzw. ausgehend von der Normalebene zur Drehachse und in Richtung der Durchströmrichtung der Turbinen-Generatoreinrichtung um einen zweiten Neigungswinkel geneigt ist, wobei der zweite Neigungswinkel aus einem Bereich bis 60°, insbesondere aus einem Bereich bis 45°, ausgewählt ist. Somit können der Kühlflüssigkeits-Zulauf und der Kühlflüssigkeits-Ablauf im radial innenliegenden Bereich quasi zueinander geneigt ausgebildet sein. Neben den bereits oben beschriebenen Effekten bezüglich des Staudrucks beim Kühlflüssigkeits-Zulauf ergibt sich durch die Neigung beim Kühlflüssigkeits-Ablauf der Vorteil, dass in der zweiten Förder- und Drosselvorrichtung ein positiver Staudruck induziert werden kann. Somit kann der Durchfluss durch den Ringraum und somit vorbei am Turbinenlaufrad auf ein für die innere Kühlung des Ringgenerators notwendige Kühlung minimiert werden, wodurch in weiterer Folge die Spaltverluste durch den Ringraum minimiert werden und die Turbinen-Generatoreinrichtung im Betrieb effektiver ist. Gleichzeitig kann durch das konstruktive Vorsehen eines für die Turbinen-Generatoreinrichtung vorteilhaften zweiten Neigungswinkels der minimal notwendige Durchfluss durch den Ringraum gewährleistet werden, um weiterhin einen verschleißarmen und damit wirtschaftlich vorteilhaften Betrieb der Turbinen-Generatoreinrichtung gewährleisten zu können.

Ferner kann vorgesehen sein, dass die erste Förder- und Drosselvorrichtung und die zweite Förder- und Drosselvorrichtung dazu eingerichtet sind, um die, aus dem die Turbinen-Generatoreinrichtung durchströmenden Betriebsmedium entnommene Kühlflüssigkeitsmenge durch den Ringraum zu fördern und die durch den Ringraum durchführbare Kühlflüssigkeitsmenge ausschließlich durch deren geometrische Ausgestaltungsform zu begrenzen. Dadurch ergeben sich ohne etwaig vorzusehende Hilfsaggregate die oben beschriebenen Vorteile.

Darüber hinaus kann vorgesehen sein, dass der Kühlflüssigkeits-Zulauf eine erste Spaltweite aufweist, die geringer ist als eine zweite Spaltweite des Ringraumes. Dabei ist von Vorteil, dass die durch den Ringraum mit der Kühl- und Schmierflüssigkeit mittransportierten Sedimente in deren Größe limitiert sind und somit eher die leichter austauschbaren Förder- und Drosselvorrichtungen als der Ringgenerator verschleißen. Dies verbessert wiederum die Wirtschaftlichkeit der Turbinen-Generatoreinrichtung.

Vorteilhaft ist auch eine Ausprägung, gemäß welcher vorgesehen sein kann, dass die erste Förder- und Drosselvorrichtung eine erste ringförmige Wirbelkammer aufweist, wobei der Kühlflüssigkeits-Zulauf mit der ersten ringförmigen Wirbelkammer fluidisch koppelbar ist. Dadurch kann auf einfache Weise eine Drosselwirkung hervorgerufen werden, um den Durchfluss durch den Ringraum zu begrenzen.

Gemäß einer Weiterbildung ist es möglich, dass die zweite Förder- und Drosselvorrichtung eine zweite ringförmige Wirbelkammer aufweist, wobei der Kühlflüssigkeits-Ablauf mit der zweiten ringförmigen Wirbelkammer fluidisch koppelbar ist. Dadurch kann auf einfache Weise eine Drosselwirkung hervorgerufen werden, um den Durchfluss durch den Ringraum zu begrenzen.

Ferner kann es zweckmäßig sein, wenn die zweite Förder- und Drosselvorrichtung radial umlaufend verteilte Verbindungsbohrungen aufweist, wobei der Ringraum mit der zweiten ringförmigen Wirbelkammer mittels der Verbindungsbohrungen fluidisch koppelbar ist. Durch die Pumpwirkung der Verbindungsbohrungen auf Grund der Zentrifugalkraft kann so ein Ausgleich der Durchströmung des Ringraums bei der Turbinen-Generatoreinrichtung, insbesondere wenn diese drehzahlvariabel ist, auf einfache Weise konstruktiv geschaffen werden. Es wird also der Gegendruck in der zweiten Förder- und Drosselvorrichtung entgegen der Kühl- und Schmierflüssigkeitsströmung durch den Ringraum erhöht, damit der Durchfluss auf ein bestimmtes Maß verringert wird, um die Spaltverluste zu minimieren, wobei gleichzeitig die Kühlung durch eine stetige Durchströmung des Ringraums gewährleistet bleibt.

Darüber hinaus kann vorgesehen sein, dass das zweite Ringelement des Kühlflüssigkeits-Ablaufs über deren Umfang verteilte, radial nach außen verlaufende Strömungsleitelemente aufweist. Dies hat ebenfalls eine Pumpwirkung zum vorteilhaften Effekt. Wiederum kann so ein Ausgleich der Durchströmung des Ringraums bei der Turbinen-Generatoreinrichtung auf einfache Weise konstruktiv geschaffen werden. Es wird also der Gegendruck in der zweiten Förder- und Drosselvorrichtung entgegen der Kühl- und Schmierflüssigkeitsströmung durch den Ringraum erhöht, damit der Durchfluss auf ein bestimmtes Maß verringert wird, um die Spaltverluste zu minimieren, wobei gleichzeitig die Kühlung durch eine stetige Durchströmung des Ringraums gewährleistet bleibt.

Des Weiteren kann vorgesehen sein, dass die Oberflächen der die Ringspalte begrenzenden Flächen der ersten und zweiten Ringelemente einen Mittelrauwert aus einem Bereich umfassend 0.2 µm bis 6.3 µm, insbesondere 0.6 µm bis 3.2 µm, aufweisen. Dadurch wird die laminare Schicht an den die Ringspalte begrenzenden Flächen auf einfache Weise gegenüber einer glatten Oberfläche verringert, wodurch die Reibungswiderstände der Förder- und Drosselvorrichtungen erhöht werden. Dadurch wird die Drosselwirkung erhöht und der Durchfluss kann wiederum auf diese einfach konstruktive Weise vorteilhaft verringert werden, um die Effektivität der Turbinen-Generatoreinrichtung im Hinblick auf die Spaltverluste zu verbessern.

Gemäß einer besonderen Ausprägung ist es möglich, dass der erste Neigungswinkel 45° beträgt.

Auch kann entsprechend einer vorteilhaften Weiterbildung vorgesehen sein, dass der zweite Neigungswinkel 45° beträgt.

Insbesondere kann es vorteilhaft sein, wenn die den Ringraum begrenzenden Flächen von Ringgenerator-Stator und Ringgenerator-Rotor eine mit Dellen versehene Oberflächenstruktur aufweisen, wobei die Oberflächenstruktur mittels eines Herstellungsverfahrens umfassend Hämmern, Kugelstrahlen oder einem gleichartigen Herstellungsverfahren hergestellt ist. Dadurch kann eine möglichst verlustarme Strömung im Ringraum geschaffen werden, um in Kombination mit den Förder- und Drosselvorrichtungen die konstruktive Einstellung des Kühl- und Schmiermitteldurchflusses vorzugsweise mittels der Förder- und Drosselvorrichtungen vornehmen zu können. Auch wird durch eine möglichst verlustarme Strömung im Ringraum der konvektive Wärmeübergang von Ringgenerator-Rotor und Ringgenerator-Stator in die Kühl- und Schmierflüssigkeit verbessert.

Ferner kann vorgesehen sein, dass die den Ringraum begrenzenden Flächen von Ringgenerator-Stator und Ringgenerator-Rotor einen Verschleißschutz bzw. einer Oberflächenbeschichtung zum Schutz vor Abrasion aufweisen. Dadurch wird die Standfestigkeit des Ringgenerators verbessert als auch kann durch eine entsprechende Materialwahl des Beschichtungsmaterials der Wärmeübergang vom Ringgenerator-Rotor und vom Ringgenerator-Stator in die Kühl- und Schmierflüssigkeit verbessert werden.

Darüber hinaus kann vorgesehen sein, dass an einen Außendurchmesser des Ringgenerator-Stators umlaufend Kühlrippen mit dem Ringgenerator-Stator gekoppelt sind. Dadurch wird der Wärmeabfuhr aus dem Ringgenerator verbessert, um in weiterer Folge auch die Durchströmung des Ringraumes mit Kühl- und Schmierflüssigkeit verringern zu können, wobei gleichzeitig eine hohe Standzeit des Ringgenerators gewährleistet bleibt.

Vorteilhaft ist auch eine Ausprägung, gemäß welcher vorgesehen sein kann, dass die Turbinen-Generatoreinrichtung eine Strömungsleitvorrichtung mit Leitelementen umfasst, wobei die Strömungsleitvorrichtung in Durchströmrichtung zwischen dem zumindest einen Verbindungselement und dem Ringgenerator angeordnet ist, wobei die Leitelemente einerseits an der Lagervorrichtung gelagert sind, wobei die Strömungsleitvorrichtung mittels einer ersten Verstellvorrichtung zur aktiven Regelung der Anströmung des Turbinenlaufrades vorgesehen ist.

Dadurch können im Hinblick auf die hydraulische Auslegung des Turbinenlauf-rads einfachere Laufschaufel- bzw. Turbinenlaufrad-Geometrien realisiert werden, da die Strömungsleitvorrichtung im Zusammenwirken mit dem Turbinenlaufrad eine hydraulisch vorteilhafte Ausgestaltung der Hydraulikbauteile ermöglicht. In weiterer Folge kann somit die Bauform der Turbinen-Generatoreinrichtung in Bezug auf die axiale Erstreckung dergleichen kompakter realisiert werden, was wiederum in Bezug auf Belastungen, Durchbiegungen und auch in Bezug auf die notwendige Festigkeit der Einzelkomponenten der Turbinen-Generatoreinrichtung diverse Vorteile mit sich bringt. In Bezug auf die Förder- und Drosselvorrichtungen können somit kleiner Spaltweiten realisiert werden.

Gemäß einer Weiterbildung ist es möglich, dass die Turbinen-Generatoreinrichtung zur Gänze im Einlaufbecken des Schachtkraftwerks aufnehmbar ist. Dabei ist vorteilhaft, dass die gesamte Turbinen-Generatoreinrichtung vom Betriebsmedium umspült ist und somit zu jedem Zeitpunkt im Betrieb der Turbinen-Generatoreinrichtung eine ausreichende bzw. verbesserte Kühlung des Ringgenerators gewährleistet ist.

Ferner kann es zweckmäßig sein, wenn zumindest drei Verbindungselemente ausgebildet sind, wobei die Lagervorrichtung am Ringgehäuse mittels der zumindest drei Verbindungselemente lagefest gehaltert ist. Dadurch kann eine besonders stabile Positionierung der Lagervorrichtung zum Ringgehäuse realisiert werden, wodurch insbesondere vom Turbinenlaufrad oder den anderen hydraulischen Komponenten induzierte Schwingungen auf verbesserte Weise aufnehmbar und dämpfbar sind. In Bezug auf die Förder- und Drosselvorrichtungen und den Ringraum zwischen Ringgenerator-Rotor und Ringgenerator-Stator verbessert diese Maßnahme wiederum die Lebensdauer der Turbinen-Generatoreinrichtung.

Darüber hinaus kann vorgesehen sein, dass der Ringgenerator der Turbinen-Generatoreinrichtung als Synchrongenerator ausgebildet ist, wobei als Erregung permanentmagnetische Pole und/oder eine bürstenlose Erregermaschine im Ringgenerator-Rotor vorgesehen sind/ist. Dadurch wird die Bauform der Turbinen-Generatoreinrichtung kompakter und der Ringgenerator-Rotor hat ein verringertes Gewicht, was bei geringerer Durchbiegung der Turbinenwelle die Förder- und Drosselvorrichtungen schont bzw. geringere Spaltweiten realisierbar macht, was die bereits beschriebenen Vorteile mit sich bringt.

Des Weiteren kann vorgesehen sein, dass der Ringgenerator mittels einer elektronischen Regelvorrichtung drehzahlregelbar ausgebildet ist. Durch die Regelbarkeit der Drehzahl der Turbinen-Generatoreinrichtung kann die Turbinen-Generatoreinrichtung aufgrund der dadurch vereinfachbaren hydraulischen Ausgestaltung der Turbinen-Generatoreinrichtung in deren Bauform kompakter hergestellt werden, was auch ein verringertes Gewicht bewirkt, was bei geringerer Durchbiegung der Turbinenwelle die Förder- und Drosselvorrichtungen schont bzw. geringere Spaltweiten realisierbar macht, was die bereits beschriebenen Vorteile mit sich bringt.

Gemäß einer besonderen Ausprägung ist es möglich, dass das Turbinenlaufrad drehbar gelagerte Turbinenschaufeln aufweist, wobei die Turbinenschaufeln einerseits am Ringgenerator-Rotor gelagert sind und andererseits an der Lagervorrichtung gelagert sind, wobei die Turbinenschaufeln mittels einer zweiten Verstellvorrichtung verdrehbar sind. Dadurch wird die Regelbarkeit der Turbinen-Generatoreinrichtung auf einen Breiteren Betriebsbereich verbessert was wiederum eine vereinfachte hydraulische Ausgestaltung der Turbinen-Generatoreinrichtung mit sich bringen kann und somit die bereits genannten Vorteile ergibt bzw. erweitert.

Entsprechend einer vorteilhaften Weiterbildung kann vorgesehen sein, dass das Ringgehäuse im Einlaufbereich eine Abstützvorrichtung aufweist, wobei die Turbinen-Generatoreinrichtung mittels der Abstützvorrichtung an einem Boden des Einlaufbeckens abstützbar ist. Damit wird die Stabilität der Turbinen-Generatoreinrichtung erhöht, was sich insbesondere vorteilhaft auf die Lebensdauer der Förder- und Drosselvorrichtungen und somit auf die Lebensdauer der gesamten Turbinen-Generatoreinrichtung auswirken kann.

Zum besseren Verständnis der Erfindung wird diese anhand der nachfolgenden Figuren näher erläutert.

Es zeigen jeweils in stark vereinfachter, schematischer Darstellung:
- Fig. 1: ein Schachtkraftwerk mit einer ersten Ausgestaltungsform einer Turbinen-Generatoreinrichtung;
- Fig. 2: einen Querschnitt der Turbinen-Generatoreinrichtung mit einer Detailansicht einer ersten möglichen Ausgestaltungsform der ersten und der zweiten Förder- und Drosselvorrichtung;
- Fig. 3: eine Querschnitt-Detailansicht einer zweiten möglichen Ausgestaltungsform der ersten und der zweiten Förder- und Drosselvorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

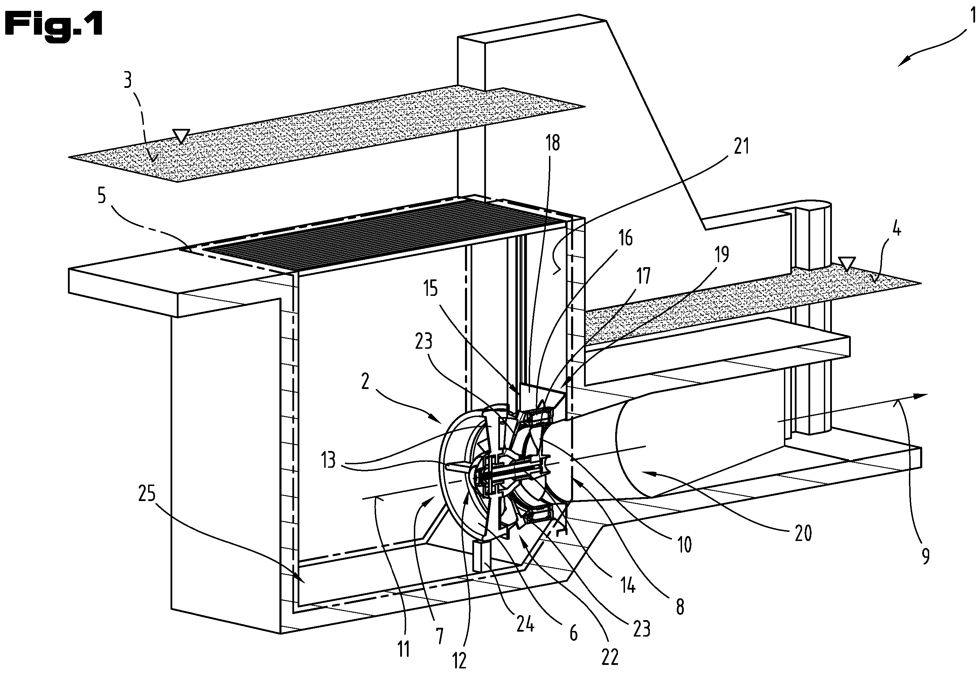

Fig. 1 zeigt ein Schachtkraftwerk 1 mit einer gegebenenfalls für sich eigenständigen ersten Ausgestaltungsform einer Turbinen-Generatoreinrichtung 2. Die Turbinen-Generatoreinrichtung 2 kann zur Stromerzeugung durch Energieumwandlung eines Abflusses zwischen einem Oberwasserniveau 3 und einem Unterwasserniveau 4 ausgebildet sein. Die Turbinen-Generatoreinrichtung 2 kann in einem Einlaufbecken 5 des Schachtkraftwerks 1 angeordnet sein. Die Turbinen-Generatoreinrichtung 2 kann ein Ringgehäuse 6 mit einem Einlaufbereich 7 und einem Auslaufbereich 8 umfassen, wobei der Abfluss zwischen Oberwasserniveau 3 bzw. aus dem Einlaufbecken 5 des Schachtkraftwerks 1 zum Unterwasserniveau 4 in Durchströmrichtung 9 durch das Ringgehäuse 6 leitbar ist und somit durch die Turbinen-Generatoreinrichtung 2 leitbar ist.

Weiters kann die Turbinen-Generatoreinrichtung 2 ein Turbinenlaufrad 10 mit einer Drehachse 11 umfassen. Auch kann das Ringgehäuse 6 im Einlaufbereich 7 eine längs der Drehachse 11 ausgerichtete tropfenförmige oder birnenförmige Lagervorrichtung 12 aufweisen, wobei die Lagervorrichtung 12 mit dem Ringgehäuse 6 mittels zumindest einem Verbindungselement 13 bzw. vorzugsweise vier Verbindungselementen 13 lagefest verbunden bzw. gehaltert ist. Das Turbinenlaufrad 10 kann mit einer entlang der Drehachse 11 ausgerichteten Turbinenwelle 14 drehfest gekoppelt sein, wobei die Turbinenwelle 14 mittels der Lagervorrichtung 12 gelagert sein kann.

Weiters kann die Turbinen-Generatoreinrichtung 2 einen Ringgenerator 15 mit einem Ringgenerator-Stator 16 und einem Ringgenerator-Rotor 17 umfassen. Der Ringgenerator-Stator 16 kann im Auslaufbereich 8 drehfest mit dem Ringgehäuse 6 gekoppelt sein und der Ringgenerator-Rotor 17 kann mit dem Turbinenlaufrad 10 an einem Außendurchmesser, bzw. mit einzelnen Laufschaufeln des Turbinenlaufrads 10 an einem radial von der Drehachse 11 distanziertem Außendurchmesser des Turbinenlaufrads 10 drehfest gekoppelt sein, sodass der Ringgenerator-Rotor 17 im Betrieb der Turbinen-Generatoreinrichtung 2 bei Drehung des Turbinenlaufrads 10 eine Drehung um die Drehachse 11 relativ zum Ringgenerator-Stator 16 erfährt.

Bezüglich des Turbinenlaufrades 10 ist es denkbar, dass dieses drehbar gelagerte Turbinenschaufeln aufweisen kann, wobei die Turbinenschaufeln am Ringgenerator-Rotor 17 und an einer mit der Turbinenwelle 14 gekoppelten Nabel verdrehbar gelagert sein können.

Weiters kann der Ringgenerator 15 als Synchrongenerator ausgebildet sein, wobei der Ringgenerator-Rotor 17 als Erregung permanentmagnetische Pole und/oder eine bürstenlose Erregermaschine umfassen kann. Des Weiteren kann der Ringgenerator 15 mittels einer elektronischen Regelvorrichtung drehzahlregelbar ausbildet sein.

Weiters kann die Turbinen-Generatoreinrichtung 2 ein Tragelement 18 mit einer Anschlussfläche 19 umfassen. Das Tragelement 18 kann dabei in Durchströmrichtung 9 dem Ringgenerator-Stator 16 bzw. dem Ringgenerator 15 nachgelagert angeordnet sein und mit dem Ringgenerator-Stator 16 drehfest gekoppelt sein. Somit kann die Turbinen-Generatoreinrichtung 2 am Tragelement 18 gelagert werden. Die Turbinen-Generatoreinrichtung 2 kann zumindest zwischen einer Wartungsposition und einer Betriebsposition verlagerbar sein, wobei die Turbinen-Generatoreinrichtung 2 bei Positionierung in der Wartungsposition vorzugsweise oberhalb des Unterwasserniveaus 4 positioniert ist und die Turbinen-Generatoreinrichtung 2 bei Positionierung in der Betriebsposition derart positioniert ist, dass der Abfluss zwischen Oberwasser und Unterwasser durch die Turbinen-Generatoreinrichtung 2 mit einem Saugrohr 20 bzw. einem Strömungskanal mit dem Unterwasser fluidisch koppelbar ist. Bei Positionierung der Turbinen-Generatoreinrichtung 2 in der Betriebsposition kann das Tragelement 18 derart ausgebildet sein, dass die Anschlussfläche 19 an einer beispielsweise an der Bauwerkstruktur des Schachtkraftwerks 1 situierten Gegenanschlussfläche 21 bzw. an einem dem Unterwasser zugewandtem Wandabschnitt des Einlaufbeckens 5 zur Anlage kommt bzw. daran angepresst wird.

Weiters kann vorgesehen sein, dass die Turbinen-Generatoreinrichtung 2 eine Strömungsleitvorrichtung 22 mit einzelnen Leitelementen 23 bzw. mit einzelnen Leitschaufeln umfasst. Die Strömungsleitvorrichtung 22 kann in Durchströmrichtung 9 dem zumindest einem Verbindungselement 13 bzw. den Verbindungselementen 13 nachgelagert angeordnet sein. Es kann vorgesehen sein, dass sich die Leitelemente 23 ausgehend von der Oberfläche der Lagervorrichtung 12 bis zu einer Innenfläche des Ringgehäuses 6 erstrecken, wobei die Leitelemente 23 an der Lagervorrichtung 12 fliegend gelagert sein können und am Ringgehäuse 6 gelagert sein können. Dabei kann die Strömungsleitvorrichtung 22 eine Verstellvorrichtung wie beispielsweise einen Regulierring umfassen, mittels welcher Verstellvorrichtung die Leitelemente 23 verstellbar sind, um so eine aktive Regelung der Anströmung des Turbinenlaufrades 10 gewährleisten bzw. ermöglichen zu können.

Auch kann noch vorgesehen sein, dass die Turbinen-Generatoreinrichtung 2 bzw. das Ringgehäuse 6 im Einlaufbereich 7 eine Abstützvorrichtung 24 umfasst, wobei die Turbinen-Generatoreinrichtung 2 mittels der Abstützvorrichtung 24 am Boden 25 des Einlaufbeckens 5 abstützbar ist.

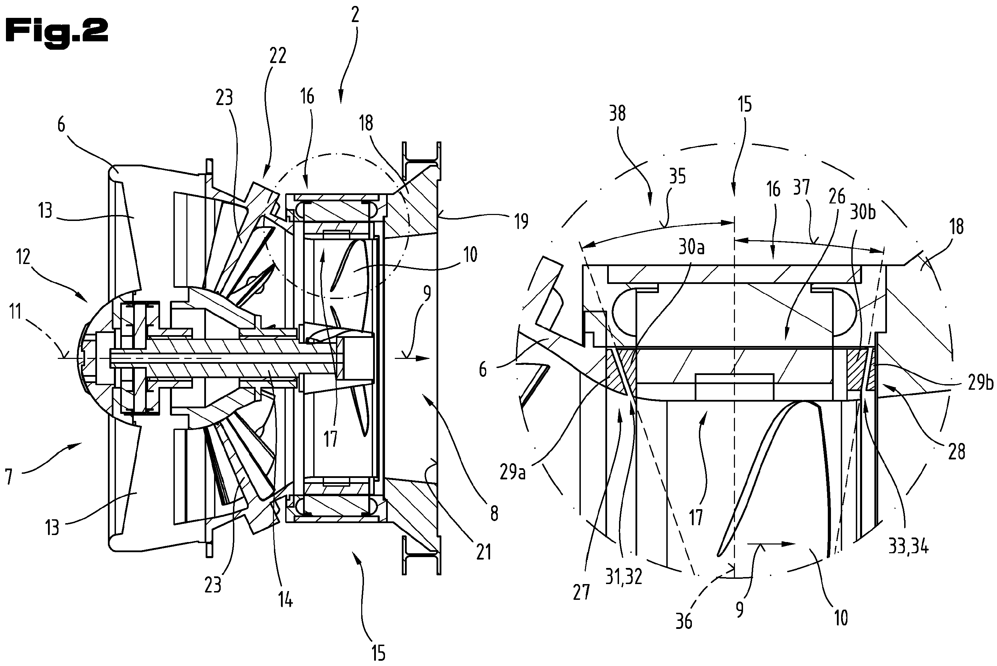

In der Fig. 2 ist ein Querschnitt der Turbinen-Generatoreinrichtung 2 mit einer Detailansicht einer ersten möglichen Ausgestaltungsform der ersten und der zweiten Förder- und Drosselvorrichtung 27, 28 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen. Fig. 2 zeigt einen Querschnitt der Turbinen-Generatoreinrichtung 2 entsprechend der Beschreibung zu Fig. 1. Aus der Detailansicht ist erkennbar, dass zwischen Ringgenerator-Rotor 17 und Ringgenerator-Stator 16 ein Ringraum 26 ausgebildet sein kann. Da der Ringgenerator-Rotor 17 drehfest mit dem Turbinenlaufrad 10 gekoppelt ist und im Betrieb der Turbinen-Generatoreinrichtung 2 der Ringgenerator-Rotor 17 eine Drehbewegung relativ zum Ringgenerator-Stator 16 ausführt, kann der Ringraum 26 von Kühlflüssigkeit bzw. Kühl- und Schmierflüssigkeit durchströmt werden.

Im Bereich der Kopplung des Ringgenerator-Stators 16 mit dem Ringgehäuse 6 kann die Turbinen-Generatoreinrichtung 2 eine radial umlaufende erste Förder- und Drosselvorrichtung 27 umfassen. Auch kann die Turbinen-Generatoreinrichtung 2 im Bereich der Kopplung des Ringgenerators 15 mit dem Tragelement 18 eine radial umlaufende zweite Förder- und Drosselvorrichtung umfassen. Die erste Förder- und Drosselvorrichtung 27 kann dazu eingerichtet sein, um dem Ringraum 26 Kühlflüssigkeit zuzuführen, wobei die zweite Förder- und Drosselvorrichtung 28 dazu eingerichtet sein kann, um die Kühlflüssigkeit aus dem Ringraum 26 abzuführen.

Die erste Förder- und Drosselvorrichtung 27 kann weiters ein erstes Ringelement 29a und ein zweites Ringelement 30a umfassen, wobei zwischen den beiden Ringelementen 29a, 30a ein als erster Ringspalt 31 ausgebildeter Kühlflüssigkeits-Zulauf 32 ausgebildet ist. Weiters kann die zweite Förder- und Drosselvorrichtung 28 ein erstes Ringelement 29b und ein zweites Ringelement 30a umfassen, wobei zwischen den beiden Ringelementen 29b, 30b ein als zweiter Ringspalt 33 ausgebildeter Kühlflüssigkeits-Ablauf 34 ausgebildet sein kann. Die Kühlflüssigkeit ist somit vom die Turbinen-Generatoreinrichtung 2 durchströmenden Betriebsmedium mittels des Kühlflüssigkeits-Zulaufs 32 in den Ringraum 26 leitbar und aus dem Ringraum 26 mittels des Kühlflüssigkeits-Ablaufs 34 abführbar, bzw. ist der Ringraum 26 mittels des Kühlflüssigkeits-Zulaufs 32 und des Kühlflüssigkeits-Ablaufs 34 mit dem die Turbinen-Generatoreinrichtung 2 durchströmenden Betriebsmedium fluidisch gekoppelt. Dabei kann vorgesehen sein, dass das erste Ringelement 29a der ersten Förder- und Drosselvorrichtung 27 und das erste Ringelement 29b der zweiten Förder- und Drosselvorrichtung 28 jeweils mit dem Ringgenerator-Stator 16 drehfest gekoppelt sind. Weiters kann vorgesehen sein, dass das zweite Ringelement 30a der ersten Förder- und Drosselvorrichtung 27 und das zweite Ringelement 30b der zweiten Förder- und Drosselvorrichtung 28 jeweils mit dem Ringgenerator-Rotor 17 drehfest gekoppelt sind.

Wie in Fig. 2 dargestellt, kann der Kühlflüssigkeits-Zulauf 32 bzw. der erste Ringspalt 31 um einen ersten Neigungswinkel 35 geneigt ausgebildet sein. Der Kühlflüssigkeits-Zulauf 32 kann dabei relativ zu einer Normalebene 36 zur Drehachse 11 um den ersten Neigungswinkel 35 in Richtung entgegen der Durchströmrichtung 9 geneigt sein. Der erste Neigungswinkel 35 kann aus einem Winkelbereich ausgewählt werden, wobei der erste Neigungswinkel 35 aus einem Bereich bis 60°, bzw. insbesondere bis 45° ausgewählt sein. Somit kann der Kühlflüssigkeits-Zulauf 32 beispielsweise derart geneigt sein, dass am Kühlflüssigkeits-Zulauf 32 ein negativer Staudruck in Bezug auf das Betriebsmedium im Betrieb der Turbinen-Generatoreinrichtung 2 entsprechend deren Durchströmrichtung 9 anliegt, da der Eintritt in den Kühlflüssigkeits-Zulauf 32 quasi der Durchströmrichtung 9 abgeneigt angeordnet ist.

Wie in Fig. 2 dargestellt, kann der Kühlflüssigkeits-Ablauf 34 bzw. der zweite Ringspalt 33 um einen zweiten Neigungswinkel 37 geneigt ausgebildet sein. Der Kühlflüssigkeits-Ablauf 34 kann dabei relativ zur Normalebene 36 zur Drehachse 11 um den zweiten Neigungswinkel 37 in Richtung der Durchströmrichtung 9 geneigt sein. Der zweiten Neigungswinkel 37 kann aus einem Winkelbereich ausgewählt werden, wobei der zweite Neigungswinkel 37 aus einem Bereich bis 60°, bzw. insbesondere bis 45° ausgewählt sein. Somit kann der Kühlflüssigkeits-Ablauf 34 beispielsweise derart geneigt sein, dass am Kühlflüssigkeits-Ablauf 34 ein positiver Staudruck in Bezug auf das Betriebsmedium im Betrieb der Turbinen-Generatoreinrichtung 2 entsprechend deren Durchströmrichtung 9 anliegt, da der Austritt aus dem Kühlflüssigkeits-Ablauf 34 quasi der Durchströmrichtung 9 zugeneigt angeordnet ist.

Durch die Ausgestaltung des Kühlflüssigkeits-Zulaufs 32 und des Kühlflüssigkeits-Ablaufs 34 kann somit dem Ringraum 26 zu- bzw. abzuführende Kühlflüssigkeitsmenge rein geometrisch begrenzt bzw. eingestellt werden. Vorzugsweise kann eine erste Spaltweite des Kühlflüssigkeits-Zulaufs 32 bzw. des ersten Ringspalts 31 geringer sein als eine zweite Spaltweite des Ringraums 26 um Abrasion der den Ringraum 26 begrenzenden Flächen oder ein Verstopfen des Ringraums 26 durch Sedimente zu verhindern.

Die den ersten Ringspalt 31 und den zweiten Ringspalt 33 begrenzenden Oberflächen können eine Drehoberfläche mit einem Mittenrauwert aufweisen, wobei der Mittenrauwert aus einem Wertebereich ausgewählt ist, welcher Wertebereich 0.2 µm bis 6.3 µm, insbesondere 0.6 µm bis 3.2 µm umfasst. Weiters können die den ersten Ringspalt 31 und den zweiten Ringspalt 33 begrenzenden Oberflächen bei Herstellung dergleichen einer Oberflächenbehandlung unterzogen worden sein, sodass die Oberflächen dellenartige Vertiefungen, wie beispielsweise in einer anderen Größenordnung auch von Golfbällen bekannt, aufweisen. Diese Oberflächenstrukturen können beispielsweise mittels Kugelstrahlen, Hämmern oder ähnlichen Herstellungsverfahren hergestellt werden. Weiters können die den Ringraum 26 begrenzenden Oberflächen, bei oder nach Herstellung des Ringgenerator-Rotors 17 und des Ringgenerator-Stators 16, einer Oberflächenbehandlung unterzogen werden, wobei ein Verschleißschutz bzw. eine Oberflächenbeschichtung zum Schutz vor Abrasion aufgetragen wird.

Um die Kühlung des Ringgenerators 15 zu verbessern können an einem äußeren Umfang des Ringgenerators 15 umlaufend angeordnet mehrere Kühlrippen 38 vorgesehen sein.

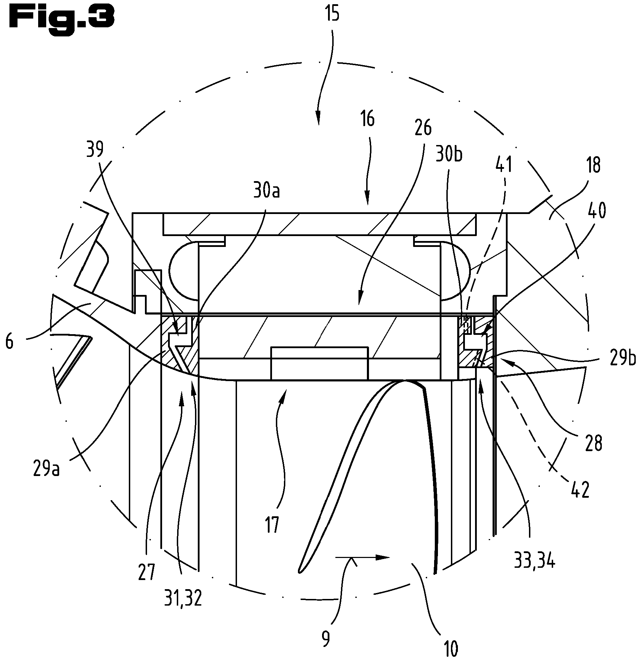

In der Fig. 3 ist eine Querschnitt-Detailansicht einer zweiten möglichen Ausgestaltungsform der ersten und der zweiten Förder- und Drosselvorrichtung 27, 28 gezeigt, wobei wiederum für gleiche Teile gleiche Bezugszeichen bzw. Bauteilbezeichnungen wie in den vorangegangenen Fig. 1 und Fig. 2 verwendet werden. Um unnötige Wiederholungen zu vermeiden, wird auf die detaillierte Beschreibung in den vorangegangenen Fig. 1 und Fig. 2 hingewiesen bzw. Bezug genommen.

Aus Fig. 3 ist ersichtlich, dass die erste Förder- und Drosselvorrichtung 27 eine ringförmige und im Querschnitt im Wesentlichen rechteckige erste Wirbelkammer 39 umfassen kann. Die erste Wirbelkammer 39 kann mit dem Kühlflüssigkeits-Zulauf 32 und mit dem Ringraum 26 fluidisch koppelbar sein. Beispielsweise kann die erste Wirbelkammer 39 mit dem Ringraum 26 mittels eines weiteren Ringspaltes fluidisch koppelbar sein. Die erste Wirbelkammer 39 kann derart mit dem Kühlflüssigkeits-Zulauf 32 fluidisch gekoppelt sein, dass beim Einströmen von Kühlflüssigkeit in die erste Wirbelkammer 39 eine Verwirbelung der Kühlflüssigkeit in der ersten Wirbelkammer 39 induziert wird.

Weiters kann vorgesehen sein, dass die zweite Förder- und Drosselvorrichtung 28 eine ringförmige und im Querschnitt im Wesentlichen rechteckige zweite Wirbelkammer 40 umfassen kann. Die zweite Wirbelkammer 40 kann mit dem Kühlflüssigkeits-Ablauf 34 und mit dem Ringraum 26 fluidisch koppelbar sein. Beispielsweise kann die zweite Wirbelkammer 40 mit dem Ringraum 26 mittels eines weiteren Ringspaltes fluidisch koppelbar sein. Die zweite Wirbelkammer 40 kann derart mit dem Kühlflüssigkeits-Ablauf 34 fluidisch koppelbar sein, dass beim Ausströmen von Kühlflüssigkeit aus dem Ringraum 26 eine Verwirbelung der Kühlflüssigkeit in der zweiten Wirbelkammer 40 induziert wird.

Des Weiteren kann vorgesehen sein, dass die zweite Förder- und Drosselvorrichtung 28 in Umfangsrichtung verteilte und radial ausgerichtete Verbindungsbohrungen 41 aufweist, wobei zumindest drei in Umfangsrichtung verteilte Verbindungsbohrungen 41 ausgebildet sein können. Die Verbindungsbohrungen 41 sind vorzugsweise im zweiten Ringelement 30b der zweiten Förder- und Drosselvorrichtung 28 vorgesehen. Mittels der Verbindungsbohrungen 41 ist die zweite Wirbelkammer 40 mit dem Ringraum 26 fluidisch koppelbar. Durch die Zentrifugalkräfte im Betrieb der Turbinen-Generatoreinrichtung 2 kann mittels der Verbindungsbohrungen 41 so der Gegendruck bzw. die Drosselwirkung der zweiten Förder- und Drosselvorrichtung 28 erhöht werden.

Weiters kann die zweite Förder- und Drosselvorrichtung 28 im Bereich des zweiten Ringspaltes 33 bzw. insbesondere am zweiten Ringelement 30b der zweiten Förder- und Drosselvorrichtung 28 über den Umfang verteilte und im Wesentlichen radial nach außen ausgerichtete Strömungsleitelemente 42 umfassen. Durch die Zentrifugalkräfte im Betrieb der Turbinen-Generatoreinrichtung 2 kann mittels der Strömungsleitelemente 42 so der Gegendruck bzw. die Drosselwirkung der zweiten Förder- und Drosselvorrichtung 28 erhöht werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Schachtkraftwerk | 29 | erste Ringelemente |
| 2 | Turbinen-Generatoreinrichtung | 30 | zweite Ringelemente |
| 3 | Oberwasserniveau | 31 | erster Ringspalt |
| 4 | Unterwasserniveau | 32 | Kühlflüssigkeits-Zulauf |
| 5 | Einlaufbecken | 33 | zweiter Ringspalt |
| 6 | Ringgehäuse | 34 | Kühlflüssigkeits-Ablauf |
| 7 | Einlaufbereich | 35 | erster Neigungswinkel |
| 8 | Auslaufbereich | 36 | Normalebene |
| 9 | Durchströmrichtung | 37 | zweiter Neigungswinkel |
| 10 | Turbinenlaufrad | 38 | Kühlrippen |
| 11 | Drehachse | 39 | erste Wirbelkammer |
| 12 | Lagervorrichtung | 40 | zweite Wirbelkammer |
| 13 | Verbindungselement | 41 | Verbindungsbohrungen |
| 14 | Turbinenwelle | 42 | Strömungsleitelemente |
| 15 | Ringgenerator | | |
| 16 | Ringgenerator-Stator | | |
| 17 | Ringgenerator-Rotor | | |
| 18 | Tragelement | | |
| 19 | Anschlussfläche | | |
| 20 | Saugrohr | | |
| 21 | Gegenanschlussfläche | | |
| 22 | Strömungsleitvorrichtung | | |
| 23 | Leitelementen | | |
| 24 | Abstützvorrichtung | | |
| 25 | Boden | | |
| 26 | Ringraum | | |
| 27 | erste Förder- und Drosselvorrichtung | | |
| 28 | zweite Förder- und Drosselvorrichtung | | |

## Patentansprüche

1. Turbinen-Generatoreinrichtung (2) zur Stromerzeugung durch Energieumwandlung eines Abflusses zwischen Oberwasser mit einem Oberwasserniveau (3) und Unterwasser mit einem Unterwasserniveau (4) in einem Schachtkraftwerk (1) mit einem Einlaufbecken (5), die Turbinen-Generatoreinrichtung (2) umfassend ein Ringgehäuse (6) mit einem Einlaufbereich (7) und einem Auslaufbereich (8), einen Ringgenerator (15), ein Tragelement (18) und ein Turbinenlaufrad (10) mit einer Drehachse (11),
- wobei das Ringgehäuse (6) im Einlaufbereich (7) eine längs der Drehachse (11) ausgerichtete birnenförmige Lagervorrichtung (12) umfasst,
-- wobei die Lagervorrichtung (12) am Ringgehäuse (6) mittels zumindest eines Verbindungselementes (13) lagefest gehaltert ist,
-- wobei eine entlang der Drehachse (11) ausgerichtete Turbinenwelle (14) mittels der Lagervorrichtung (12) gelagert ist, wobei das Turbinenlaufrad (10) im Auslaufbereich (8) mit der Turbinenwelle (14) gekoppelt ist,
- wobei der Ringgenerator (15) einen Ringgenerator-Stator (16) umfasst, wobei der Ringgenerator-Stator (16) im Auslaufbereich (8) mit dem Ringgehäuse (6) drehfest gekoppelt ist und axial gegenüberliegend mit dem Tragelement (18) drehfest gekoppelt ist,
- wobei der Ringgenerator (15) einen Ringgenerator-Rotor (17) umfasst, wobei der Ringgenerator-Rotor (17) mit dem Turbinenlaufrad (10) an einem Außendurchmesser des Turbinenlaufrads (10) drehfest gekoppelt ist,
- wobei zwischen dem Ringgenerator-Stator (16) und dem Ringgenerator-Rotor (17) ein Ringraum (26) ausgebildet ist, und
- wobei die Turbinen-Generatoreinrichtung (2) im Bereich der Kopplung des Ringgehäuses (6) mit dem Ringgenerator (15) eine radial umlaufende erste Förder- und Drosselvorrichtung (27) für die dem Ringraum (26) zuzuführende Kühlflüssigkeit und im Bereich der Kopplung des Ringgenerators (15) mit dem Tragelement (18) eine radial umlaufende zweite Förder- und Drosselvorrichtung (28) für die aus dem Ringraum (26) abzuführende Kühlflüssigkeit umfasst,
-- wobei die erste Förder- und Drosselvorrichtung (27) einen als erster Ringspalt (31) ausgebildeten Kühlflüssigkeits-Zulauf (32) aufweist und die zweite Förder- und Drosselvorrichtung (28) einen als zweiter Ringspalt (33) ausgebildeten Kühlflüssigkeits-Ablauf (34) aufweist,
-- wobei die erste und die zweite Förder- und Drosselvorrichtung (28) jeweils ein mit dem Ringgenerator-Stator (16) drehfest gekoppeltes erstes Ringelement (29a, 29b) und jeweils ein mit dem Ringgenerator-Rotor (17) drehfest gekoppeltes zweites Ringelement (30a, 30b) umfassen, wobei der erste und der zweite Ringspalt (33) zwischen dem jeweils zusammengehörigen ersten Ringelement (29a, 29b) und dem zweiten Ringelement (30a, 30b) ausgebildet sind,
**dadurch gekennzeichnet, dass**
der Kühlflüssigkeits-Zulauf (32) relativ zu bzw. ausgehend von einer Normalebene (36) zur Drehachse (11) und entgegen der Durchströmrichtung (9) der Turbinen-Generatoreinrichtung (2) um einen ersten Neigungswinkel (35) geneigt ist, wobei der erste Neigungswinkel (35) aus einem Bereich bis 60°, insbesondere aus einem Bereich bis 45°, ausgewählt ist.

2. Turbinen-Generatoreinrichtung (2) nach Anspruch 1 **dadurch gekennzeichnet, dass** der Kühlflüssigkeits-Ablauf (34) relativ zur bzw. ausgehend von der Normalebene (36) zur Drehachse (11) und in Richtung der Durchströmrichtung (9) der Turbinen-Generatoreinrichtung (2) um einen zweiten Neigungswinkel (37) geneigt ist, wobei der zweite Neigungswinkel (37) aus einem Bereich bis 60°, insbesondere aus einem Bereich bis 45°, ausgewählt ist.

3. Turbinen-Generatoreinrichtung (2) nach einem der vorhergehenden Ansprüche, **dadurch gekennzeichnet, dass** die erste Förder- und Drosselvorrichtung (27) und die zweite Förder- und Drosselvorrichtung (28) dazu eingerichtet sind, um die, aus dem die Turbinen-Generatoreinrichtung (2) durchströmenden Betriebsmedium entnommene Kühlflüssigkeitsmenge durch den Ringraum (26) zu fördern und die durch den Ringraum (26) durchführbare Kühlflüssigkeitsmenge ausschließlich durch deren geometrische Ausgestaltungsform zu begrenzen.

4. Turbinen-Generatoreinrichtung (2) nach einem der vorhergehenden Ansprüche, **dadurch gekennzeichnet, dass** der Kühlflüssigkeits-Zulauf (32) eine erste Spaltweite aufweist, die geringer ist als eine zweite Spaltweite des Ringraumes (26).

5. Turbinen-Generatoreinrichtung (2) nach einem der vorhergehenden Ansprüche, **dadurch gekennzeichnet, dass** die erste Förder- und Drosselvorrichtung (27) eine ringförmige erste Wirbelkammer (39) aufweist, wobei der Kühlflüssigkeits-Zulauf (32) mit der ringförmigen ersten Wirbelkammer (39) fluidisch koppelbar ist.

6. Turbinen-Generatoreinrichtung (2) nach einem der vorhergehenden Ansprüche, **dadurch gekennzeichnet, dass** die zweite Förder- und Drosselvorrichtung (28) eine ringförmige zweite Wirbelkammer (40) aufweist, wobei der Kühlflüssigkeits-Ablauf (34) mit der ringförmigen zweiten Wirbelkammer (40) fluidisch koppelbar ist.

7. Turbinen-Generatoreinrichtung (2) nach Anspruch 6, **dadurch gekennzeichnet, dass** die zweite Förder- und Drosselvorrichtung (28) radial umlaufend verteilte Verbindungsbohrungen (41) aufweist, wobei der Ringraum (26) mit der ringförmigen zweiten Wirbelkammer (40) mittels der Verbindungsbohrungen (41) fluidisch koppelbar ist.

8. Turbinen-Generatoreinrichtung (2) nach einem der vorhergehenden Ansprüche, **dadurch gekennzeichnet, dass** das zweite Ringelement (30) des Kühlflüssigkeits-Ablaufs (34) über deren Umfang verteilte, radial nach außen verlaufende Strömungsleitelemente (42) aufweist.

9. Turbinen-Generatoreinrichtung (2) nach einem der vorhergehenden Ansprüche, **dadurch gekennzeichnet, dass** die Oberflächen der die Ringspalte (31, 33) begrenzenden Flächen der ersten und zweiten Ringelemente (29a, 30a, 29b, 30b) einen Mittelrauwert aus einem Bereich umfassend 0.2 µm bis 6.3 µm, insbesondere 0.6 µm bis 3.2 µm, aufweisen

10. Turbinen-Generatoreinrichtung (2) nach einem der vorhergehenden Ansprüche, **dadurch gekennzeichnet, dass** der erste Neigungswinkel (35) 45° beträgt.

11. Turbinen-Generatoreinrichtung (2) nach einem der Ansprüche 3-10 in Verbindung mit Anspruch 2, **dadurch gekennzeichnet, dass** der zweite Neigungswinkel (37) 45° beträgt.

12. Turbinen-Generatoreinrichtung (2) nach einem der vorhergehenden Ansprüche, **dadurch gekennzeichnet, dass** die den Ringraum (26) begrenzenden Flächen von Ringgenerator-Stator (16) und Ringgenerator-Rotor (17) eine mit dellenartigen Vertiefungen versehene Oberflächenstruktur aufweisen, wobei die Oberflächenstruktur mittels eines Herstellungsverfahrens umfassend Hämmern, Kugelstrahlen oder einem gleichartigen Herstellungsverfahren hergestellt ist.

13. Turbinen-Generatoreinrichtung (2) nach einem der vorhergehenden Ansprüche, **dadurch gekennzeichnet, dass** an einen Außendurchmesser des Ringgenerator-Stators (16) umlaufend Kühlrippen (38) mit dem Ringgenerator-Stator (16) gekoppelt sind.

14. Turbinen-Generatoreinrichtung (2) nach einem der vorhergehenden Ansprüche, **dadurch gekennzeichnet, dass** die Turbinen-Generatoreinrichtung (2) eine Strömungsleitvorrichtung (22) mit Leitelementen (23) umfasst, wobei die Strömungsleitvorrichtung (22) in Durchströmrichtung (9) zwischen dem zumindest einen Verbindungselement (13) und dem Ringgenerator (15) angeordnet ist, wobei die Leitelemente einerseits an der Lagervorrichtung (12) gelagert sind, wobei die Strömungsleitvorrichtung (22) mittels einer ersten Verstellvorrichtung zur aktiven Regelung der Anströmung des Turbinenlaufrades (10) vorgesehen ist

15. Turbinen-Generatoreinrichtung (2) nach einem der vorhergehenden Ansprüche, **dadurch gekennzeichnet, dass** das Turbinenlaufrad (10) drehbar gelagerte Turbinenschaufeln aufweist, wobei die Turbinenschaufeln einerseits am Ringgenerator-Rotor (17) gelagert sind und andererseits an der Lagervorrichtung (12) gelagert sind, wobei die Turbinenschaufeln mittels einer zweiten Verstellvorrichtung in der Lagervorrichtung (12) verdrehbar sind.

## Claims

1. A turbine-generator unit (2) for generating electricity by energy conversion of an outflow between headwater with a headwater level (3) and tailwater with a tailwater level (4) in a pit-type hydropower plant (1) with an intake basin (5),
the turbine-generator unit (2) comprising a rim-shaped housing (6) with an inlet region (7) and an outlet region (8), a rim-type generator (15), a support element (18) and a turbine impeller (10) with an axis of rotation (11),
- wherein the rim-shaped housing (6) in the inlet region (7) comprises a pear-shaped bearing device (12) aligned along the axis of rotation (11),
-- wherein the bearing device (12) is held in a fixed position on the rim-shaped housing (6) by means of at least one connecting element (13),
-- wherein a turbine shaft (14) aligned along the axis of rotation (11) is mounted by means of the bearing device (12), wherein the turbine impeller (10) is coupled to the turbine shaft (14) in the outlet region (8),
- wherein the rim-type generator (15) comprises a rim generator stator (16), wherein the rim generator stator (16) is coupled to the rim-shaped housing (6) in the outlet region (8) in a rotationally fixed manner and is coupled axially opposite to the support element (18) in a rotationally fixed manner,
- wherein the rim-type generator (15) comprises a rim generator rotor (17), wherein the rim generator rotor (17) is coupled to the turbine impeller (10) at an outer diameter of the turbine impeller (10) in a rotationally fixed manner,
- wherein an annulus (26) is formed between the rim generator stator (16) and the rim generator rotor (17), and
- wherein the turbine-generator unit (2) in the region of the coupling of the rim-shaped housing (6) to the rim-type generator (15) comprises a radially circulating first conveying and throttling device (27) for the cooling liquid to be supplied to the annulus (26) and in the region of the coupling of the rim-type generator (15) to the support element (18) comprises a radially circulating second conveying and throttling device (28) for the cooling liquid to be discharged from the annulus (26),
-- wherein the first conveying and throttling device (27) has a cooling liquid inlet (32) formed as a first annular gap (31) and the second conveying and throttling device (28) has a cooling liquid outlet (34) formed as a second annular gap (33),
-- wherein the first and the second conveying and throttling device (28) each comprise a first rim element (29a, 29b) coupled to the rim generator stator (16) in a rotationally fixed manner and a second rim element (30a, 30b) coupled to the rim generator rotor (17) in a rotationally fixed manner, wherein the first and the second annular gap (33) are formed between the respectively associated first rim element (29a, 29b) and the second rim element (30a, 30b),
**characterized in that**
the cooling liquid inlet (32) is inclined by a first inclination angle (35) relative to and/or starting from a normal plane (36) to the axis of rotation (11) and against the flow direction (9) of the turbine-generator unit (2), wherein the first inclination angle (35) is selected from a range of up to 60°, in particular from a range of up to 45°.

2. The turbine-generator unit (2) according to claim 1, **characterized in that** the cooling liquid outlet (34) is inclined by a second inclination angle (37) relative to and/or starting from the normal plane (36) to the axis of rotation (11) and in the flow direction (9) through the turbine-generator unit (2), wherein the second inclination angle (37) is selected from a range of up to 60°, in particular from a range of up to 45°.

3. The turbine-generator unit (2) according to one of the preceding claims, **characterized in that** the first conveying and throttling device (27) and the second conveying and throttling device (28) are configured to convey the quantity of cooling liquid taken from the operating medium flowing through the turbine-generator unit (2) through the annulus (26) and to limit the quantity of cooling liquid which can be conveyed through the annulus (26) exclusively by their geometric configuration.

4. The turbine-generator unit (2) according to one of the preceding claims, **characterized in that** the cooling liquid inlet (32) has a first gap width which is smaller than a second gap width of the annulus (26).

5. The turbine-generator unit (2) according to one of the preceding claims, **characterized in that** the first conveying and throttling device (27) has an annular first swirl chamber (39), wherein the cooling liquid inlet (32) is fluidically couplable to the annular first swirl chamber (39).

6. The turbine-generator unit (2) according to one of the preceding claims, **characterized in that** the second conveying and throttling device (28) has an annular second swirl chamber (40), wherein the cooling liquid outlet (34) is fluidically couplable to the annular second swirl chamber (40).

7. The turbine-generator unit (2) according to claim 6, **characterized in that** the second conveying and throttling device (28) has radially circumferentially distributed connecting bores (41), wherein the annulus (26) is fluidically couplable to the annular second swirl chamber (40) by means of the connecting bores (41).

8. The turbine-generator unit (2) according to one of the preceding claims, **characterized in that** the second rim element (30) of the cooling liquid outlet (34) has flow guide elements (42) which are distributed over the circumference of the turbine-generator unit (2) and extend radially outwards.

9. The turbine-generator unit (2) according to one of the preceding claims, **characterized in that** the surfaces of the faces of the first and second rim elements (29a, 30a, 29b, 30b) bounding the annular gaps (31, 33) have a mean roughness value from a range comprising 0.2 µm to 6.3 µm, in particular 0.6 µm to 3.2 µm.

10. The turbine-generator unit (2) according to one of the preceding claims, **characterized in that** the first inclination angle (35) is 45°.

11. The turbine-generator unit (2) according to one of claims 3-10 in conjunction with claim 2, **characterized in that** the second inclination angle (37) is 45°.

12. The turbine-generator unit (2) according to one of the preceding claims, **characterized in that** the faces of the rim generator stator (16) and rim generator rotor (17) bounding the annulus (26) have a surface structure provided with dent-like depressions, wherein the surface structure is produced by means of a manufacturing process comprising hammering, shot blasting or a similar manufacturing process.

13. The turbine-generator unit (2) according to one of the preceding claims, **characterized in that** cooling fins (38) are coupled to the rim generator stator (16) circumferentially on an outer diameter of the rim generator stator (16).

14. The turbine-generator unit (2) according to one of the preceding claims, **characterized in that** the turbine-generator unit (2) comprises a flow guide device (22) with guiding elements (23), wherein the flow guide device (22) is arranged in the flow direction (9) between the at least one connecting element (13) and the rim-type generator (15), wherein the guiding elements are mounted on the bearing device (12), wherein the flow guide device (22) is provided for actively controlling the flow towards the turbine impeller (10) by means of a first adjusting device.

15. The turbine-generator unit (2) according to one of the preceding claims, **characterized in that** the turbine impeller (10) has rotatably mounted turbine blades, wherein the turbine blades are mounted on the rim generator rotor (17) on the one hand and are mounted on the bearing device (12) on the other hand, wherein the turbine blades are rotatable in the bearing device (12) by means of a second adjusting device.

## Revendications

1. Dispositif turbine-générateur (2) destiné à la production d'électricité par conversion d'énergie d'un écoulement entre une eau d' amont présentant un niveau d'eau d'amont (3) et une eau d'aval présentant un niveau d'eau d'aval (4) dans une centrale en puits (1) avec un bassin d'admission (5), le dispositif turbine-générateur (2) comprenant un carter annulaire (6) avec une zone d'admission (7) et une zone de sortie (8), un générateur annulaire (15), un élément porteur (18) et une roue de turbine (10) avec un axe de rotation (11),
- le carter annulaire (6) comprenant, dans la zone d'admission (7), un dispositif de palier (12) en forme de poire, orienté selon l'axe de rotation (11),
-- le dispositif de palier (12) étant maintenu en position sur le carter annulaire (6) au moyen d'au moins un élément de liaison (13),
-- un arbre de turbine (14) orienté selon l'axe de rotation (11) supporté par le dispositif de palier (12), la roue de turbine (10) étant couplée à l'arbre de turbine (14) dans la zone de sortie (8),
- le générateur annulaire (15) comprenant un stator de générateur annulaire (16), le stator de générateur annulaire (16) étant, dans la zone de sortie (8), couplé de manière solidaire en rotation au carter annulaire (6) et, axialement en vis-à-vis, couplé de manière solidaire en rotation à l'élément porteur (18),
- le générateur annulaire (15) comprenant un rotor de générateur annulaire (17), le rotor de générateur annulaire (17) couplé de manière solidaire en rotation à la roue de turbine (10) au niveau d'un diamètre extérieur de la roue de turbine (10),
- un espace annulaire (26) étant formé entre le stator de générateur annulaire (16) et le rotor de générateur annulaire (17), et
- le dispositif turbine-générateur (2) comprenant, dans la zone de couplage du carter annulaire (6) avec le générateur annulaire (15), un premier dispositif d'acheminement et d'étranglement (27) circulant radialement pour le fluide de refroidissement à introduire dans l'espace annulaire (26) et, dans la zone de couplage du générateur annulaire (15) avec l'élément porteur (18), un deuxième dispositif d'acheminement et d'étranglement (28) circulant radialement pour le fluide de refroidissement à évacuer de l'espace annulaire (26),
-- le premier dispositif d'acheminement et d'étranglement (27) présentant une admission de fluide de refroidissement (32) réalisée sous la forme d'un premier interstice annulaire (31) et le deuxième dispositif d'acheminement et d'étranglement (28) présentant une évacuation de fluide de refroidissement (34) réalisée sous la forme d'un deuxième interstice annulaire (33),
-- le premier et le deuxième dispositif d'acheminement et d'étranglement (28) comprenant chacun un premier élément annulaire (29a, 29b) couplé de manière solidaire en rotation au stator de générateur annulaire (16) et chacun un deuxième élément annulaire (30a, 30b) couplé de manière solidaire en rotation au rotor de générateur annulaire (17), le premier et le deuxième interstice annulaire (33) étant formés entre le premier élément annulaire (29a, 29b) et le deuxième élément annulaire (30a, 30b) correspondants,
**caractérisé en ce que**
l'admission du fluide de refroidissement (32) est inclinée, par rapport à ou à partir d'un plan normal (36) à l'axe de rotation (11) et à l'encontre de la direction d'écoulement (9) du dispositif turbine-générateur (2), d'un premier angle d'inclinaison (35), le premier angle d'inclinaison (35) étant sélectionné dans une plage allant jusqu'à 60°, en particulier jusqu'à 45°.

2. Dispositif turbine-générateur (2) selon la revendication 1, **caractérisé en ce que** l'évacuation du fluide de refroidissement (34) est inclinée, par rapport à ou à partir du plan normal (36) à l'axe de rotation (11) et dans le sens de la direction d'écoulement (9) du dispositif turbine-générateur (2), d'un deuxième angle d'inclinaison (37), le deuxième angle d'inclinaison (37) étant sélectionné dans une plage allant jusqu'à 60°, en particulier jusqu'à 45°.

3. Dispositif turbine-générateur (2) selon l'une des revendications précédentes, **caractérisé en ce que** le premier dispositif d'acheminement et d'étranglement (27) et le deuxième dispositif d'acheminement et d'étranglement (28) sont configurés pour acheminer, à travers l'espace annulaire (26), la quantité de fluide de refroidissement prélevée sur le fluide de service s'écoulant à travers le dispositif turbine-générateur (2) et pour limiter la quantité de fluide de refroidissement pouvant traverser l'espace annulaire (26) exclusivement par leur forme géométrique.

4. Dispositif turbine-générateur (2) selon l'une des revendications précédentes, **caractérisé en ce que** l'admission du fluide de refroidissement (32) présente une première largeur d'interstice inférieure à une deuxième largeur d'interstice de l'espace annulaire (26).

5. Dispositif turbine-générateur (2) selon l'une des revendications précédentes, **caractérisé en ce que** le premier dispositif d'acheminement et d'étranglement (27) présente une première chambre tourbillonnaire (39) annulaire, l'admission du fluide de refroidissement (32) pouvant être couplée en fluide avec la première chambre tourbillonnaire (39) annulaire.

6. Dispositif turbine-générateur (2) selon l'une des revendications précédentes, **caractérisé en ce que** le deuxième dispositif d'acheminement et d'étranglement (28) présente une deuxième chambre tourbillonnaire (40) annulaire, l'évacuation du fluide de refroidissement (34) pouvant être couplée en fluide avec la deuxième chambre tourbillonnaire (40) annulaire.

7. Dispositif turbine-générateur (2) selon la revendication 6, **caractérisé en ce que** le deuxième dispositif d'acheminement et d'étranglement (28) présente des perçages de liaison (41) répartis de manière radiale et circulaire, l'espace annulaire (26) pouvant être couplé de manière fluide avec la deuxième chambre tourbillonnaire (40) annulaire au moyen des perçages de liaison (41).

8. Dispositif turbine-générateur (2) selon l'une des revendications précédentes, **caractérisé en ce que** le deuxième élément annulaire (30) de l'évacuation du fluide de refroidissement (34) présente, répartis sur sa circonférence, des éléments directeurs d'écoulement (42) s'étendant radialement vers l'extérieur.

9. Dispositif turbine-générateur (2) selon l'une des revendications précédentes, **caractérisé en ce que** les surfaces des faces délimitant les interstices annulaires (31, 33) des premier et deuxième éléments annulaires (29a, 30a, 29b, 30b) présentent une rugosité moyenne sélectionnée dans une plage allant de 0,2 µm à 6,3 µm, en particulier de 0,6 µm à 3,2 µm.

10. Dispositif turbine-générateur (2) selon l'une des revendications précédentes, **caractérisé en ce que** le premier angle d'inclinaison (35) est de 45°.

11. Dispositif turbine-générateur (2) selon l'une des revendications 3 à 10 en combinaison avec la revendication 2, **caractérisé en ce que** le deuxième angle d'inclinaison (37) est de 45°.

12. Dispositif turbine-générateur (2) selon l'une des revendications précédentes, **caractérisé en ce que** les faces délimitant l'espace annulaire (26) du stator de générateur annulaire (16) et du rotor de générateur annulaire (17) présentent une structure de surface pourvue de dépressions de type alvéolaire, la structure de surface étant réalisée par un procédé de fabrication comprenant le martelage, le grenaillage ou un procédé de fabrication similaire.

13. Dispositif turbine-générateur (2) selon l'une quelconque des revendications précédentes, **caractérisé en ce que** des ailettes de refroidissement (38) sont couplées au stator de générateur annulaire (16) de manière périphérique à un diamètre extérieur du stator de générateur annulaire (16).

14. Dispositif turbine-générateur (2) selon l'une des revendications précédentes, **caractérisé en ce que** le dispositif turbine-générateur (2) comprend un dispositif de guidage d'écoulement (22) avec des éléments directeurs (23), le dispositif de guidage d'écoulement (22) étant disposé, dans la direction d'écoulement (9), entre le ou les éléments de liaison (13) et le générateur annulaire (15), les éléments directeurs étant d'une part montés sur le dispositif de palier (12), le dispositif de guidage d'écoulement (22) étant prévu au moyen d'un premier dispositif de réglage pour la régulation active de l'écoulement incident sur la roue de turbine (10).

15. Dispositif turbine-générateur (2) selon l'une des revendications précédentes, **caractérisé en ce que** la roue de turbine (10) présente des aubes de turbine montées de manière rotative, les aubes de turbine étant d'une part montées sur le rotor de générateur annulaire (17) et d'autre part montées sur le dispositif de palier (12), les aubes de turbine étant orientables au moyen d'un deuxième dispositif de réglage dans le dispositif de palier (12).
